# EUROPEAN PATENT SPECIFICATION

(11) **EP 3 879 769 B1**
(45) Date of publication and mention of the grant of the patent: **30.08.2023**
(21) Application number: 19914138.3
(22) Date of filing: 02.02.2019
(51) Int. Cl.: H04L 69/164, H04L 47/24, H04L 47/2441, H04L 67/61

(54) **METHOD AND APPARATUS FOR TRANSMITTING DATA**
VERFAHREN UND VORRICHTUNG ZUR ÜBERTRAGUNG VON DATEN
PROCÉDÉ ET APPAREIL DE TRANSMISSION DE DONNÉES

(43) Date of publication of application: 15.09.2021
(73) Proprietor: Huawei Technologies Co., Ltd., Longgang District Shenzhen, Guangdong 518129 (CN)
(72) Inventor: WANG, Yiming, Shenzhen, Guangdong 518129 (CN); LUO, Yong, Shenzhen, Guangdong 518129 (CN)
(74) Representative: Isarpatent
(86) International application number: PCT/CN2019/074607
(87) International publication number: WO 2020/155148

(56) References cited:
- EP-A1- 3 414 877
- WO-A1-2018/086076
- CN-A- 107 889 131
- CN-A- 109 218 762
- US-A1- 2015 163 149
- US-A1- 2018 063 853
- US-A1- 2018 124 218
- US-B2- 10 104 704

## Description

### TECHNICAL FIELD

This disclosure relates to the field of communications technologies, and the invention in particularrelates to a data transmission method and a data transmission apparatus.

### BACKGROUND

For network services, in the case of network congestion and link quality deterioration, packet loss may occur frequently during data transmission, causing a larger delay. This severely affects user experience. For example, players of online games, such as mobile games, may frequently encounter problems such as frame freezing, login difficulties, and even disconnection during network congestion. This affects game experience of the players.

US 2018/063 853 A1 describes a data transmission method with a data delivery process between apps using HTTP or QUIC. QUIC is here used as an alternative method of transmission and the problem of resource re-allocation for content delivery is dealt with.

EP 3 414 877 A1 discloses a technique for transport protocol selection and setup of a connection between a client and a server as well as using the QUIC protocol for latency reduction.

Similarly, US 2018/124 218 A1 relates to the implementation of auto-switching network protocols for optimal efficiency.

### SUMMARY

The object of the invention is to provide a data transmission method and data transmission apparatus, so as to reduce impact of packet loss and a delay in a data transmission process, thereby improving user experience of a network service. This object is solved by the independent claims and embodiments and improvements are listed in the dependent claims. Hereinafter, what is referred to as "aspect", "design" or "implementation", relates to "embodiments" of the invention and when used in connection with the expression "according to the invention" which designates steps/features of the independent claims as claimed, designates the broadest embodiment claimed with the independent claims.

According to a first aspect, an embodiment according to the invention provides a data transmission method. The method includes:
A first network device obtains a to-be-sent first data packet.

The first network device identifies whether the first data packet belongs to a delay-sensitive service flow.

If the first data packet belongs to the delay-sensitive service flow, the first network device encapsulates the first data packet into a first quick user datagram protocol internet connections QUIC packet according to the QUIC protocol.

The first network device sends the first QUIC packet to a second network device.

The first network device and the second network device are any two devices of a gateway device, an access point device, and a terminal device in a same network.

In this embodiment according to the invention, the first network device obtains the to-be-sent first data packet, and identifies whether the first data packet belongs to the delay-sensitive service flow. If the first data packet belongs to the delay-sensitive service flow, it indicates that packet loss of the first data packet during transmission between the first network device and the second network device has relatively great impact on a user. Therefore, the first data packet may be encapsulated into the first QUIC packet according to the QUIC protocol, and then the first QUIC packet is sent to the second network device. The QUIC protocol improves a transmission success rate of the first QUIC packet between the first network device and the second network device. Therefore, impact of packet loss of the first data packet between the first network device and the second network device is reduced, a delay is reduced, and user experience of a network service is improved.

According to the invention, the method further includes:
The first network device receives a second QUIC packet sent by the second network device; and
the first network device parses the second QUIC packet according to the QUIC protocol to obtain a second data packet.

In this embodiment according to the invention, after receiving the second QUIC packet, the first network device parses the packet according to the QUIC protocol, to obtain the packet. Therefore, the delay is reduced without affecting packet quality, and user experience of the network service is improved.

According to the invention, the method also includes:
The first network device identifies a connection identifier from the second QUIC packet.

The first network device schedules retransmission of lost packets in the second data packet based on a service flow priority corresponding to the connection identifier.

In this embodiment according to the invention, the first network device further determines a priority of lost packet retransmission based on a connection identifier in a packet. In this way, an important packet may be preferentially retransmitted, thereby reducing a delay of the important packet, and improving user experience of a delay-sensitive service.

According to the invention, the method includes:
The first network device identifies a connection identifier from the second QUIC packet.

According to an embodiment, the first network device schedules a sequence of the second data packet in a wireless fidelity Wi-Fi queue based on a priority of entering a wireless fidelity multi-media WMM queue corresponding to the connection identifier.

In this embodiment, the first network device may further determine a priority of sending a packet based on a connection identifier in the packet. In this way, the important packet may be preferentially retransmitted, thereby reducing the delay of the important packet, and improving user experience of the delay-sensitive service.

In this embodiment, whether the first data packet is a delay-sensitive packet may be determined in the following three manners:
A first possible implementation to determine whether the first data packet is a delay-sensitive packet includes:
The first network device receives report information for the delay-sensitive service flow; and
the first network device identifies a packet of the delay-sensitive service flow based on the report information.

A second possible implementation to determine whether the first data packet is a delay-sensitive packet includes:
The first network device obtains configuration information for the delay-sensitive service flow; and
the first network device identifies a packet of the delay-sensitive service flow based on the configuration information.

A third possible implementation to determine whether the first data packet is a delay-sensitive packet includes:
The first network device identifies a packet of the delay-sensitive service flow based on a historical service flow and a machine learning model, where
a packet of the historical service flow is first encapsulated on the first network device according to the QUIC protocol and then sent to the second network device.

According to the invention, the invention provides a data transmission apparatus. The apparatus is used in a first network device and the apparatus includes:
a packet obtaining unit, configured to obtain a to-be-sent first data packet;
a packet identification unit, configured to identify whether the first data packet belongs to a delay-sensitive service flow;
a packet encapsulation unit, configured to encapsulate, if the first data packet belongs to the delay-sensitive service flow, the first data packet into a first quick user datagram protocol internet connections QUIC packet according to the QUIC protocol; and
a packet sending unit, configured to send the first QUIC packet to a second network device, where
the first network device and the second network device are any two devices of a gateway device, an access point device, and a terminal device in a same network.

According to the invention, the apparatus further includes:
a packet receiving unit, configured to receive a second QUIC packet sent by the second network device; and
a packet parsing unit, configured to parse the second QUIC packet according to the QUIC protocol to obtain a second data packet.

The apparatus according to the invention further includes:
a connection identifier identification unit, configured to identify a connection identifier from the second QUIC packet; and
a retransmission scheduling unit, configured to schedule, by the first network device, retransmission of lost packets in the second data packet based on a service flow priority corresponding to the connection identifier.

The apparatus according to the invention includes:
the connection identifier identification unit, configured to identify a connection identifier from the second QUIC packet; and
a sequence scheduling unit, configured to schedule a sequence of the second data packet in a wireless fidelity Wi-Fi queue based on a priority of entering a wireless fidelity multi-media WMM queue corresponding to the connection identifier.

According to an embodiment, the apparatus further includes:
a report information receiving unit, configured to receive report information for the delay-sensitive service flow; and
a first packet identification unit, configured to identify a packet of the delay-sensitive service flow based on the report information.

According to an embodiment, the apparatus further includes:
a configuration information obtaining unit, configured to obtain configuration information for the delay-sensitive service flow; and
a second packet identification unit, configured to identify a packet of the delay-sensitive service flow based on the configuration information.

According to an embodiment, the apparatus further includes:
a third packet identification unit, configured to identify, by the first network device, a packet of the delay-sensitive service flow based on a historical service flow and a machine learning model, where
a packet of the historical service flow is first encapsulated on the first network device according to the QUIC protocol and then sent to the second network device.

According to an embodiment there is provided the data transmission apparatus which includes: a processor and a memory.

The memory is configured to store instructions.

The processor is configured to execute the instructions stored in the memory, so as to perform the data transmission method according to the first aspect in this embodiment.

The disclosure further describes a computer-readable storage medium, including instructions. When the instructions are run on a computer, the computer is enabled to perform the data transmission method according to the first aspect.

The disclosure further describes a computer program product including instructions. When the instructions are run on a computer, the computer is enabled to perform the data transmission method according to the first aspect.

In the data transmission method and apparatus provided according to the invention, the first network device and the second network device are any two devices of a gateway device, an access point device, and a terminal device in a same network. For example, the first network device may be the gateway device, and the second device may be the terminal device. The first network device obtains the to-be-sent first data packet, and identifies whether the first data packet belongs to the delay-sensitive service flow. If the first data packet belongs to the delay-sensitive service flow, the first data packet may be encapsulated into a first quick user datagram protocol internet connections QUIC packet according to the QUIC protocol, and the first QUIC packet may be sent to the second device. In the embodiments , when the first data packet is the delay-sensitive service flow, packet loss of the first data packet during transmission between the first network device and the second network device has relatively great impact on a user. Therefore, the first data packet may be encapsulated into the first QUIC packet according to the QUIC protocol. The QUIC protocol improves a transmission success rate of the first QUIC packet between the first network device and the second network device. Therefore, impact of packet loss of the first data packet in transmission between the first network device and the second network device is reduced, a delay is reduced, and user experience of a network service is improved.

### BRIEF DESCRIPTION OF DRAWINGS

To describe the technical solutions in the embodiments more clearly, the following briefly describes the accompanying drawings required for describing the embodiments. It is clear that the accompanying drawings in the following description show merely some embodiments , and an ordinary person skilled in the art may derive other drawings from these accompanying drawings.
FIG. 1 is a schematic diagram of a data transmission process that is based on a network service according to an embodiment;
FIG. 2 is a structural block diagram of a data transmission system according to an embodiment;
FIG. 3 is a schematic diagram of a hardware scenario of data transmission according to an embodiment;
FIG. 4 is a flowchart of a data transmission method according to an embodiment;
FIG. 5 is a schematic diagram of a formation process of a first data packet according to an embodiment;
FIG. 6 is an example diagram of a form of a first data packet according to an embodiment;
FIG. 7 is an example diagram of a form of a first QUIC packet according to an embodiment;
FIG. 8 is a schematic diagram of a QUIC header according to an embodiment;
FIG. 9 is a structural block diagram of a data transmission apparatus according to an embodiment; and
FIG. 10 is an architectural diagram of hardware of a data transmission device according to an embodiment.

### DESCRIPTION OF EMBODIMENTS

Embodiments provide a data transmission method and apparatus, to reduce impact of packet loss and a delay in a data transmission process, and improve user experience of a network service.

In the specification, claims, and accompanying drawings , the terms "first", "second", "third", "fourth", and so on (if existent) are intended to distinguish between similar objects but do not necessarily indicate a specific order or sequence. It should be understood that the data termed in such a way are interchangeable in proper circumstances so that the embodiments of the present invention described herein can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those units, but may include other units not expressly listed or inherent to such a process, method, system, product, or device.

For a network service, in a case of network congestion or weak network coverage, a delay occurs. In addition, packet loss may occur frequently during data transmission, causing a larger delay. For example, in received data, if one data packet is lost, the data packet needs to wait for retransmission so that complete data is obtained for further data processing. Therefore, frequent packet loss means that relatively long waiting time is required, and a larger delay is caused.

In an actual operation, a delay severely affects user experience. For example, users of online games such as mobile games frequently encounter problems such as frame freezing, login difficulties, and even offline during network congestion. Users of video websites such as a live broadcast website also encounter problems such as the frame freezing and unsmooth playing during network congestion. Users of e-commerce and search engine service websites or the like encounter problems such as page loading delay and page opening failure during network congestion. From another perspective, the delay leads to poor user experience of the network services and will cause loss to network service providers. For example, a delay of online games such as mobile games exceeding 350 ms may cause a loss of nearly 30% of the player users one week later. Similarly, a delay of 0.5s in generating a search result page on the search engine may cause less searching by users or a loss of nearly 20% of traffic. A page loading speed of the e-commerce directly affects a sales amount. If loading time on a shopping page exceeds 10s, 50% users will give up shopping.

Therefore, how to reduce the impact of packet loss in the data transmission process, reduce a delay caused by lost packet retransmission, and improve user experience of the network service is an urgent problem to be resolved.

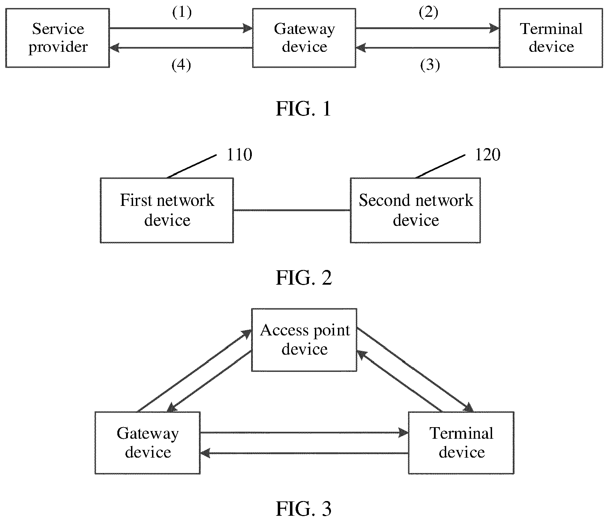

Referring to FIG. 1, a data transmission process of a network service may be specifically as follows: (1) A service provider sends data to a gateway device in a network in which a terminal device of a user is located; (2) the gateway device sends the data to the terminal device, and the gateway device may directly send the data to the terminal device, or may send the data to the terminal device through an access point (access point, AP) device; (3) the terminal device sends reported data to the gateway device; and (4) the gateway device sends the reported data to the service provider.

In the foregoing data transmission process, in process (1), as a network device gradually progresses, when the data is sent from the service provider to the gateway device, a possibility of network congestion is gradually reduced, and a possibility of packet loss is also relatively low. However, in process (2), because of a bandwidth limitation, a relatively large quantity of terminal devices, a complex wireless environment of a home network, different uncontrollable interference, and the like, when the data is sent from the gateway device to the terminal device, the possibility of network congestion is relatively high, and the possibility of packet loss is relatively high. In other words, packet loss in the data transmission process mostly occurs in processes (2) and (4). To be specific, in a process of transmitting data from the gateway device to the terminal device, for example, in the home network, when a relatively large quantity of terminal devices access the network, network congestion is easily caused, and packet loss easily occurs for the data sent by the gateway device to the terminal device.

It can be learned from the foregoing analysis that, if impact of packet loss of the data in the processes (2) and (4) is reduced in a targeted manner, impact of packet loss in the entire data transmission process can be effectively reduced, thereby effectively reducing a delay and improving user experience of the network service.

Based on the foregoing technical problem, an embodiment provides a data transmission method and apparatus. A first network device and a second network device may be any two devices of a gateway device, an access point device, and a terminal device in a same network. The first network device and the second network device may transmit data. The first network device may obtain a to-be-sent first data packet, and identify whether the first data packet belongs to a delay-sensitive service flow. If the first data packet belongs to the delay-sensitive service flow, the first data packet may be encapsulated into a first quick UDP internet connections (Quick UDP Internet Connections, QUIC) packet according to the QUIC protocol of the user datagram protocol (User Datagram Protocol, UDP), and the first network device sends the formed first QUIC packet to the second device.

In the embodiment, when the first data packet is the delay-sensitive service flow, packet loss of the first data packet during transmission between the first network device and the second network device has relatively great impact on a user. Therefore, the first data packet may be encapsulated into the first QUIC packet according to the QUIC protocol, and the QUIC protocol improves a transmission success rate of the first QUIC packet between the first network device and the second network device. Therefore, impact of packet loss of the first data packet in transmission between the first network device and the second network device is reduced, a delay is reduced, and user experience of a network service is improved.

FIG. 2 is a schematic framework diagram of a transmission system according to an embodiment . The system includes a first network device 110 and a second network device 120. The first network device 110 and the second network device 120 are any two devices of a gateway device, an access point device, and a terminal device in a same network. The first network device 110 may obtain a to-be-sent first data packet, and identify whether the first data packet belongs to a delay-sensitive service flow. If the first data packet belongs to the delay-sensitive service flow, the first data packet may be encapsulated into a first QUIC packet according to the QUIC protocol, and the first network device 110 sends the formed first QUIC packet to the second device 120.

FIG. 3 is a schematic diagram of a hardware scenario of data transmission according to an embodiment. A first network device 110 and a second network device 120 are any two devices of a gateway device, an access point device, and a terminal device in a same network. The gateway device may transmit data to the access point device and/or the terminal device, the access point device may transmit data to the gateway device and/or the terminal device, and the terminal device may transmit data to the gateway device and/or the access point device.

The gateway device is used as the first network device, and the terminal device is used as the second network device. The gateway device may obtain a to-be-sent first data packet, encapsulate the first data packet into a first QUIC packet according to the QUIC protocol, and send the formed first QUIC packet to the terminal device. When the first data packet is the delay-sensitive service flow, packet loss of the first data packet during transmission between the first network device and the second network device has relatively great impact on the user. Therefore, the gateway device may encapsulate the first data packet into the first QUIC packet according to the QUIC protocol. The QUIC protocol improves a transmission success rate of the first QUIC packet between the gateway device and the terminal device. Therefore, impact of packet loss of a packet in transmission between the gateway device and the terminal device is reduced, a delay is reduced, and user experience of a network service is improved.

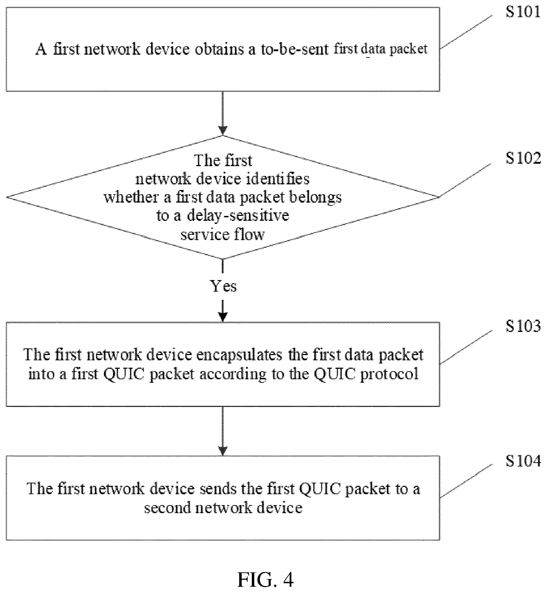

For ease of understanding, the following specifically describes an example of a data transmission method provided in the embodiments . FIG. 4 is a flowchart of a data transmission method according to an embodiment. The method includes the following steps.

S101 according to the invention: A first network device obtains a to-be-sent first data packet.

The first network device is any one of a gateway device, an access point device, and a terminal device. The gateway device is also referred to as an inter-network connector or a protocol converter, implements network interconnection at a network layer and implements communication in a local area network or a cellular network. The access point device may be a device that is in the local area network and that is used by the terminal device to access a network. The terminal device may be a device that interacts with a user, may input and output data, and access the network through the access point device or the gateway device. The terminal device may be, for example, a smart watch, a television, a tablet computer, a smart speaker, or a mobile phone.

When the first network device is a terminal device, the to-be-sent first data packet may be a packet generated in an application (application, APP) on the terminal device. The terminal device sends the first data packet based on a target MAC address in the first data packet. Specifically, the first data packet may be directly sent to the gateway device, or may be sent to the gateway device through the access point device. The first data packet may be, for example, a packet formed by request information for a video in video live broadcast software.

When the first network device is a gateway device, the to-be-sent first data packet may be a received packet sent by a service provider. The gateway device sends the first data packet based on the target MAC address in the first data packet. Specifically, the first data packet may be directly sent to the terminal device, or may be sent to the terminal device through the access point device. The first data packet may be, for example, a packet formed by video data sent by a video live broadcast provider.

When the first network device is an access point device, the to-be-sent first data packet may be a packet sent by the gateway device, or may be a packet sent by the terminal device. After receiving the first data packet, the access point device may send the first data packet based on the target MAC address in the first data packet. For example, if the first data packet sent by the gateway device is received, the first data packet is sent to the terminal device; or if the first data packet sent by the terminal device is received, the first data packet is sent to the gateway device.

The first data packet in this embodiment may be formed after a plurality of times of encapsulation. Based on the open system interconnect (open system interconnect, OSI) model, the terminal device may work in a hierarchical state. A hierarchical structure may specifically include an application layer, a transport layer, a network layer, a data link layer, and the like. Generally, data generated at an upper layer may be transmitted to a current layer, and after the data is encapsulated at the current layer, the encapsulated data may be transmitted to a lower layer.

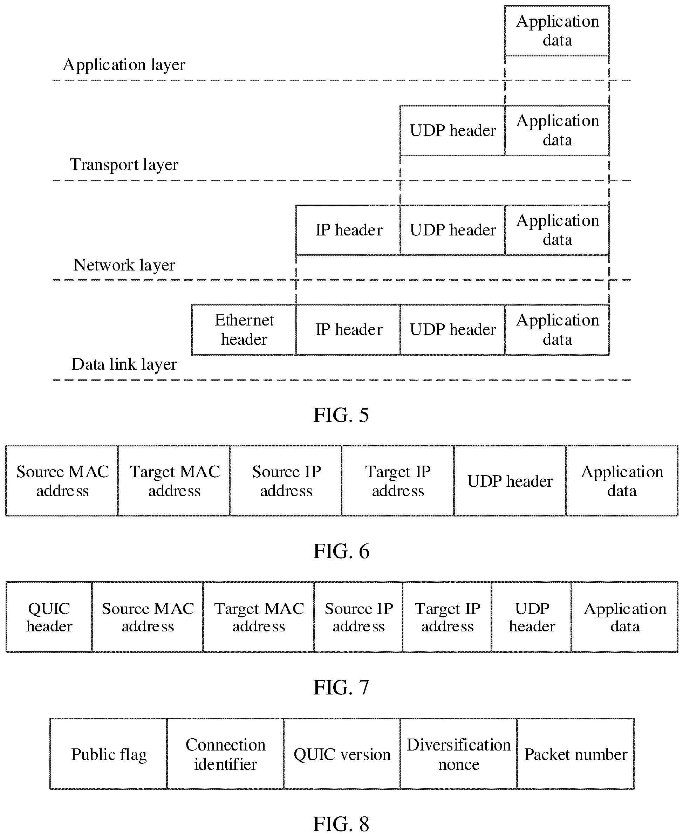

Specifically, FIG. 5 shows a schematic diagram of a formation process of a first data packet according to an embodiment. Application data may be generated at the application layer. At the transport layer, a transmission protocol header may be encapsulated for the application data to form a data packet, where the transmission protocol header may be, for example, a transmission control protocol (transmission control protocol, TCP) header or a UDP header. At the network layer, a network protocol header may be encapsulated for the data packet to form a data frame, where the network protocol header may be, for example, an internet protocol (Internet Protocol, IP) header, and the IP header may include a source IP and a target IP. At the data link layer, a local area network header may be encapsulated for the data frame to form a first data packet, where the local area network header may be an Ethernet header, and the Ethernet header may include a source MAC address and a target MAC address.

In an example, for a form of the first data packet, refer to FIG. 6. The first data packet includes application data, a UDP header, a target IP address, a source IP address, a target MAC address, and a source MAC address.

S 102 according to the invention: The first network device identifies whether the first data packet belongs to a delay-sensitive service flow, and if the first data packet belongs to the delay-sensitive service flow, S103 is performed.

In this embodiment, the first data packet may belong to any application program, that is, may belong to any service flow. However, some application programs are less sensitive to packet loss and a delay. Therefore, impact of packet loss during packet transmission does not need to be reduced. In other words, the impact of packet loss during packet transmission may be reduced only for a packet of a delay-sensitive service flow. The delay-sensitive service flow is a service that is highly sensitive to a delay, for example, online games such as a mobile game, video websites such as a live broadcast website, and an e-commerce or search engine service website or the like.

That the first network device determines whether the first data packet belongs to the delay-sensitive service flow may be specifically: The first network device receives report information for the delay-sensitive service flow, and identifies the delay-sensitive service flow based on the report information, to determine whether the first data packet belongs to the delay-sensitive service flow. The report information may be generated by an application program, and is used to identify that a packet corresponding to the application program belongs to the delay-sensitive service flow. If the first data packet is the packet corresponding to the application program, it may be considered that the first data packet belongs to the delay-sensitive service flow.

That the first network device determines whether the first data packet belongs to the delay-sensitive service flow may also be specifically: The first network device obtains configuration information of the delay-sensitive service flow, and identifies the delay-sensitive service flow based on the configuration information, to determine whether the first data packet belongs to the delay-sensitive service flow. The first network device may identify the configuration information of the first data packet according to a preset rule of the delay-sensitive service flow. For example, the configuration information of the first data packet may be an identifier of the first data packet, the source IP address in the first data packet, or a delay-sensitive IP address in the first data packet. When the first network device determines that the configuration information of the first data packet meets the preset rule of the delay-sensitive service flow, it may be considered that the first data packet belongs to the delay-sensitive service flow.

That the first network device determines whether the first data packet belongs to the delay-sensitive service flow may also be specifically: The first network device identifies a packet of the delay-sensitive service flow based on a historical service flow and a machine learning model, to determine whether the first data packet belongs to the delay-sensitive service flow. A packet of the historical service flow is a historical packet sent by the first network device to a second network device, and the packet of the historical service flow is first encapsulated on the first network device according to the QUIC protocol and then sent to the second network device. Specifically, the machine learning model may be trained by using the historical service flow, so that a trained machine learning model has a capability of identifying the packet of the delay-sensitive service flow, to determine whether the first data packet belongs to the delay-sensitive service flow.

It may be understood that the first network device may determine, based on the report information for the delay-sensitive service flow or the configuration information of the delay-sensitive service flow, that the packet of the historical service flow belongs to the delay-sensitive service flow, to encapsulate the packet of the historical service flow according to the QUIC protocol, and then send, to the second network device, the packet of the historical service flow in which a QUIC header is encapsulated.

S103: The first network device encapsulates the first data packet into a first QUIC packet according to the QUIC protocol.

In this embodiment, when it is determined that the first data packet belongs to the delay-sensitive service flow, it indicates that the first data packet corresponds to a service that is highly sensitive to the delay. After obtaining the to-be-sent first data packet, the first network device does not directly send the first data packet, but first encapsulates the first data packet according to the QUIC protocol to form the first QUIC packet.

In a possible implementation, encapsulation may be performed on the first data packet, that is, a QUIC header is encapsulated outside the Ethernet header, to form the first QUIC packet. FIG. 7 is an example diagram of a first QUIC packet in an embodiment. The first QUIC packet is formed by encapsulating the QUIC header at a MAC layer of the first data packet. The first QUIC packet includes application data, a UDP header, a target IP address, a source IP address, a target MAC address, a source MAC address, and the QUIC header.

In another possible implementation, the first data packet may be parsed, and then a parsing result is encapsulated to form the first QUIC packet. A first data packet formation process shown in FIG. 5 is used as an example. The Ethernet header in the first data packet may be parsed, and the data frame including the internet protocol header is encapsulated according to the QUIC protocol, to form the first QUIC packet. Before the first QUIC packet is sent, the Ethernet header may be further encapsulated for the first QUIC packet. Alternatively, the Ethernet header and the internet protocol header in the first data packet may be parsed, and the data packet including the transmission protocol header is encapsulated according to the QUIC protocol, to form the first QUIC packet. Before the first QUIC packet is sent, the internet protocol header and the Ethernet header may be further encapsulated for the first QUIC packet. Alternatively, the Ethernet header, the internet protocol header, and the transmission protocol header in the first data packet may be parsed, and a payload, namely, the application data, in the first data packet is encapsulated according to the QUIC protocol to form the first QUIC packet. Before the first QUIC packet is sent, the transmission protocol header, the internet protocol header, and the Ethernet header may be further encapsulated for the first QUIC packet.

The QUIC protocol is a UDP-based transmission protocol, and integrates advantages of protocols such as the TCP, the transport layer security (transport layer security, TLS) protocol, and hypertext transfer protocol version 2 (HyperText Transfer Protocol, HTTP/2). The QUIC protocol has advantages such as low control costs and fast connection establishment.

The QUIC protocol retains a multiplexing function of the HTTP/2 protocol. Data transmission is based on a stream (stream), and all streams are independent of each other. Therefore, packet loss on one stream does not affect data transmission on another stream. In addition, the QUIC protocol is a UDP-based protocol, and there is no strict sequence for data packet processing. Therefore, when a data packet needs to be retransmitted, only a resource corresponding to the data packet is affected, and another independent resource is not affected. In conclusion, encapsulating a packet according to the QUIC protocol may effectively reduce the delay.

If the first network device directly encapsulates the first data packet, that is, encapsulates the QUIC header outside the Ethernet header of the first data packet, the network layer or the transport layer of the first data packet does not need to include an additional QUIC header. In other words, on a transmission channel excluding the first network device and the second network device, the first data packet does not carry the QUIC header. Therefore, no additional transmission resource is occupied.

During specific implementation, for the QUIC header, refer to FIG. 8. The QUIC header includes a public flag (public flag), a connection identifier (connection ID), a QUIC version (QUIC version), a diversification nonce (diversification Nonce), and a packet number (packet number).

The public flag is a definition of content in the QUIC header. For example, when a value of the public flag is "0x04", it indicates that the QUIC header includes a 32-byte diversification nonce. When a value of the public flag is "0x00", it indicates that the packet number occupies one byte. When a value of the public flag is "0x10", it indicates that the packet number occupies two bytes. The QUIC version indicates a 32-bit non-transparent tag of a QUIC protocol version, and exists only when that the QUIC header includes the QUIC version is defined by the public flag. A client and a server may negotiate a supported QUIC version through the QUIC version. The packet number is set by the public flag. Generally, the packet number is allocated by a sender. A packet number of a first packet is 1, and a packet number of each subsequent packet is 1 greater than that of a previous packet.

The connection identifier may be a 64-bit statistical random number, and the number is an identifier of connection. The connection identifier may be, for example, mapped from a priority of a service flow. The priority of the service flow may be 802.1p, and a class of service (class of service, COS) of a MAC layer, or may be a terms of service (terms of service, TOS) field, and a differentiated services code point (differentiated services code point, DSCP) field of an IP header, or the like. The priority may indicate a priority of lost packet retransmission scheduling for a packet. The network device may perform resource scheduling based on the connection identifier, for example, priority queuing (priority queuing, PQ), and weighted round robin (weighted round robin WRR) scheduling. The connection identifier may also be mapped to a priority of entering a wireless fidelity multi-media (wireless fidelity multi-media, WMM) queue, and a WMM priority may indicate a scheduling policy for sorting packets in a wireless fidelity (wireless fidelity, Wi-Fi) queue.

The connection identifier may be an application identifier, and is used to identify packets corresponding to different application programs. For example, a first identifier is used to identify a packet corresponding to video software, and a second identifier is used to identify a packet corresponding to a search engine. Correspondingly, different application identifiers may correspond to different service flow priorities. For example, a priority of a service flow corresponding to the video software may be higher than a priority of a service flow corresponding to the search engine. Therefore, lost packet retransmission corresponding to the video software may be preferentially scheduled. Different application identifiers may also correspond to different WMM priorities. For example, a WMM priority corresponding to the video software may be higher than a WMM priority corresponding to the search engine, so that a packet corresponding to the video software may be prior to a packet corresponding to the search engine in the Wi-Fi queue.

The connection identifier may also be a MAC address and/or an IP address of a corresponding terminal device, for example, may be a MAC address and/or an IP address of a terminal device that generates the first data packet, or may be a MAC address and/or an IP address of a terminal device that receives the first data packet. Different terminal devices may correspond to different service flow priorities. For example, a priority of a service flow of a mobile phone may be higher than a priority of a service flow of a computer, thereby improving a priority of a mobile game or live broadcast on the mobile phone. Different terminal devices may also correspond to different WMM priorities. For example, a WMM priority of the mobile phone may be higher than a WMM priority of the computer, so that a packet corresponding to the mobile phone may be prior to a packet corresponding to the computer in the Wi-Fi queue.

Alternatively, the connection identifier may be a COS and/or TOS priority of the service flow, and is used to indicate that a packet with a higher priority is preferentially sent in a case of network congestion, link quality deterioration, or the like. For example, a COS and/or TOS priority of the service flow corresponding to the video software may be higher than a COS and/or TOS priority of the service flow corresponding to the search engine, so that the service flow corresponding to the video software is preferentially sent in the case of network congestion or link quality deterioration.

The connection identifier may alternatively be one or more of the application identifier, the MAC address of the terminal device, the IP address of the terminal device, the COS priority of the service flow, and the TOS priority of the service flow, to comprehensively determine a priority of the first data packet.

S104 according to the invention: The first network device sends the first QUIC packet to the second network device.

The second network device is a device in a gateway device, an access point device, and a terminal device that are in a same network with the first network device. The same network may refer to a same local area network, and network devices in the local area network may perform wireless fidelity (wireless fidelity, Wi-Fi) communication or power line communication (power line communication, PLC).

In addition, the second network device and the first network device are different devices. Specifically, when the first network device is a gateway device, the second network device may be the access point device or the terminal device that is in the same network with the gateway device. When the first network device is the access point device, the second network device may be the gateway device or the terminal device that is in the same network with the access point device. When the first network device is the terminal device, the second network device may be the gateway device or the access point device that is in the same network with the terminal device.

The first network device may parse headers of the MAC layer and the network layer in the first data packet, and determines, based on the target IP address of the network layer in the packet, whether a receiver is another device in the same network. If the receiver is the another device in the same network, the first network device may send the first data packet based on the target MAC address of the MAC layer. In this embodiment, the target MAC address in the first data packet is a MAC address of the second network device.

After receiving the first QUIC packet, the second network device may parse the first QUIC packet according to the QUIC protocol to obtain the first data packet. Parsing the first QUIC packet may be specifically: parsing the first QUIC packet according to the QUIC protocol to obtain an original packet, and then performing redundancy check on the original packet and error correction on a lost part of the packet to obtain the first data packet.

During specific implementation, the redundancy check may be performed, based on a sequence number of a data packet, on the original packet obtained after parsing, to determine whether a data packet is lost. In addition to data of each data packet of the QUIC protocol, each data packet further carries some data of another data packet. Therefore, if it is determined that a data packet is lost, redundant data of the another data packet may be used to complete the packet, to form the first data packet, and there is no need to retransmit the lost data packet.

If packet loss of the first QUIC packet is relatively severe, the packet may not be completed by using the redundant data. In this case, the second network device needs to identify the connection identifier from the first QUIC packet, to schedule retransmission of lost packets in the first data packet based on a service flow priority corresponding to the connection identifier. Alternatively, the second network device may identify the connection identifier from the first QUIC packet, and schedule a sequence of the first data packet in the Wi-Fi queue based on a WMM priority corresponding to the connection identifier. In other words, a packet with a higher priority may be preferentially sent, or a lost data packet in a packet with a higher priority may be preferentially retransmitted when it is found that packet loss occurs. In this way, a transmission delay of a service flow with a higher priority may be preferentially reduced. During specific implementation, a higher priority may be set for a mobile game service or a live broadcast service, so that a delay of the service may be reduced.

In addition, if the QUIC header of the first QUIC packet is encapsulated at the MAC layer, when the second network device finds that a packet loss phenomenon exists in the first QUIC packet, it indicates that the packet loss occurs when the first QUIC packet is transmitted from the first network device to the second network device. Therefore, the first network device that is in the same network with the second network device may be requested to retransmit data, instead of requesting a service provider to retransmit the data. This may further reduce waiting time and reduce a delay.

In this embodiment , the first network device and the second network device may usually transmit a packet to each other. Therefore, the first network device according to the invention further receives a second QUIC packet sent by the second network device, and parse the second QUIC packet according to the QUIC protocol to obtain a second data packet. For a process in which the first network device parses the second QUIC packet, refer to a process in which the second network device parses the first QUIC packet. Details are not described herein again.

The first network device according to the invention identifies a connection identifier from the second QUIC packet, to schedule retransmission of lost packets in the second data packet loss based on a service flow priority corresponding to the connection identifier.

In a data transmission method provided in the embodiments , the first network device and the second network device are any two devices of a gateway device, an access point device, and a terminal device in a same network. For example, the first network device may be the gateway device, and the second device may be the terminal device. The first network device obtains the to-be-sent first data packet, and identifies whether the first data packet belongs to the delay-sensitive service flow. If the first data packet belongs to the delay-sensitive service flow, the first data packet may be encapsulated into the first QUIC packet according to the QUIC protocol, and the first QUIC packet may be sent to the second device. In the embodiments , when the first data packet is the delay-sensitive service flow, packet loss of the first data packet during transmission between the first network device and the second network device has relatively great impact on a user. Therefore, the first data packet may be encapsulated into the first QUIC packet according to the QUIC protocol. The QUIC protocol improves a transmission success rate of the first QUIC packet between the first network device and the second network device. Therefore, impact of packet loss of a packet in transmission between the first network device and the second network device is reduced, a delay is reduced, and user experience of a network service is improved.

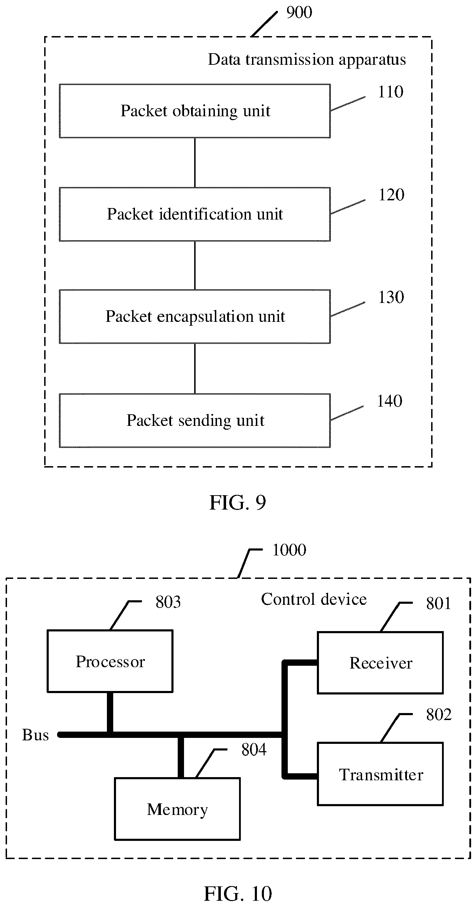

According to a data transmission method provided in the embodiments , the embodiments further provides a data transmission apparatus. FIG. 9 is a structural block diagram of a data transmission apparatus 900 according to an embodiment, specifically corresponding to functions of the foregoing data transmission method. The function may be implemented by hardware, or may be implemented by hardware by executing corresponding software. The hardware or the software includes one or more units corresponding to the foregoing functions, and the units may be software and/or hardware. The apparatus 900 includes:
a packet obtaining unit 110, configured to obtain a to-be-sent first data packet;
a packet identification unit 120, configured to identify whether the first data packet belongs to a delay-sensitive service flow;
a packet encapsulation unit 130, configured to encapsulate, if the first data packet belongs to the delay-sensitive service flow, the first data packet into a first quick user datagram protocol internet connections QUIC packet according to a QUIC protocol; and
a packet sending unit 140, configured to send, by the first network device, the first QUIC packet to a second network device, where
the first network device and the second network device are any two devices of a gateway device, an access point device, and a terminal device in a same network.

The apparatus according to the invention further includes:
a packet receiving unit, configured to receive a second QUIC packet sent by the second network device; and
a packet parsing unit, configured to parse the second QUIC packet according to the QUIC protocol to obtain a second data packet.

The apparatus according to the invention further includes:
a connection identifier identification unit, configured to identify a connection identifier from the second QUIC packet; and
a retransmission scheduling unit, configured to schedule, by the first network device, retransmission of lost packets in the second data packet based on a service flow priority corresponding to the connection identifier.

The apparatus according to the invention includes:
the connection identifier identification unit, configured to identify a connection identifier from the second QUIC packet; and optionally
a sequence scheduling unit, configured to schedule a sequence of the second data packet in a wireless fidelity Wi-Fi queue based on a priority of entering a wireless fidelity multi-media WMM queue corresponding to the connection identifier.

Optionally, the apparatus further includes:
a report information receiving unit, configured to receive report information for the delay-sensitive service flow; and
a first packet identification unit, configured to identify a packet of the delay-sensitive service flow based on the report information.

Optionally, the apparatus further includes:
a configuration information obtaining unit, configured to obtain configuration information for the delay-sensitive service flow; and
a second packet identification unit, configured to identify a packet of the delay-sensitive service flow based on the configuration information.

Optionally, the apparatus further includes:
a third packet identification unit, configured to identify, by the first network device, a packet of the delay-sensitive service flow based on a historical service flow and a machine learning model, where
a packet of the historical service flow is first encapsulated on the first network device according to the QUIC protocol and then sent to the second network device.

In the data transmission apparatus disclosed in this application, the first network device and the second network device may be any two devices of a gateway device, an access point device, and a terminal device in a same network. The first network device obtains the to-be-sent first data packet, and identifies whether the first data packet belongs to the delay-sensitive service flow. If the first data packet belongs to the delay-sensitive service flow, packet loss of the first data packet during transmission between the first network device and the second network device has relatively great impact on a user. Therefore, the first data packet may be encapsulated into the first QUIC packet according to the quick user datagram protocol internet connections QUIC protocol, and then the first QUIC packet is sent to the second network device. The QUIC protocol improves a transmission success rate of the first QUIC packet between the first network device and the second network device. Therefore, impact of packet loss of the first data packet in transmission between the first network device and the second network device is reduced, a delay is reduced, and user experience of a network service is improved.

The following describes a data transmission device in an embodiment. Referring to FIG. 10, a control device 1000 may include:
a receiver 801, a transmitter 802, a processor 803, and a memory 804 (there may be one or more processors 803 in a control device 800, and one processor is used as an example in FIG. 8). In some embodiments , the receiver 801, the transmitter 802, the processor 803, and the memory 804 may be connected by using the bus or in another manner. In FIG. 8, a connection by using the bus is used as an example.

The memory 804 may include a read-only memory and a random access memory, and provide an instruction and data to the processor 803. A part of the memory 804 may further include an NVRAM. The memory 804 stores an operating system and an operation instruction, an executable module or a data structure, or a subnet thereof, or an extended set thereof. The operation instruction may include various operation instructions for implementing various operations. The operating system may include various system programs, to implement various basic services and process hardware-based tasks.

The processor 803 controls operations of a terminal device, and the processor 803 may also be referred to as a CPU. In a specific application, components of a packet generation device are coupled together by using a bus system. In addition to a data bus, the bus system may further include a power bus, a control bus, and a status signal bus. However, for clear description, various types of buses in the figure are marked as the bus system.

The methods disclosed in the foregoing embodiments may be applied to the processor 803, or may be implemented by the processor 803. The processor 803 may be an integrated circuit chip and has a signal processing capability. In an implementation process, steps in the foregoing methods can be implemented by using a hardware integrated logical circuit in the processor 803, or by using instructions in a form of software. The foregoing processor 803 may be a general purpose processor, a DSP, an ASIC, an FPGA or another programmable logic device, a discrete gate or transistor logic device, or a discrete hardware component. It may implement or perform the methods, the steps, and logical block diagrams that are disclosed in the embodiments . The general purpose processor may be a microprocessor, or the processor may be any conventional processor or the like. Steps of the methods disclosed with reference to the embodiments may be directly executed and accomplished by a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 804, and the processor 803 reads information in the memory 804 and completes the steps of the foregoing data transmission method in combination with hardware of the processor.

The receiver 801 may be configured to receive input digit or character information, and generate signal input related to a related setting and function control of a user plane apparatus. The transmitter 802 may include a display device such as a display screen. The transmitter 802 may be configured to output the digit or character information through an external interface.

In this embodiment, the receiver 801 and the transmitter 802 are configured to implement data receiving and sending. The processor 803 is configured to implement data receiving and sending by using the receiver 801 and the transmitter 802, to complete a data transmission process performed by the foregoing control device.

An embodiment further provides a computer-readable storage medium, configured to store program code. The program code is used to perform any implementation of the data transmission method in the foregoing embodiments.

An embodiment further provides a computer program product including instructions. When the computer program product is run on a computer, the computer is enabled to perform any implementation of the data transmission method in the foregoing embodiments.

"First" in names such as the "first data packet " and the "first QUIC packet" mentioned in the embodiments is merely used as a name identifier, but does not represent first in sequence. This rule is also applicable to "second" and the like.

From the foregoing descriptions of the implementations, a person skilled in the art may clearly understand that some or all steps of the methods in the embodiments may be implemented by software in addition to a universal hardware platform. Based on such an understanding, the technical solutions may be implemented in a form of a software product. The computer software product may be stored in a storage medium, such as a read-only memory (English: read-only memory, ROM)/RAM, a magnetic disk, or an optical disc, and includes several instructions for instructing a computer device (which may be a personal computer, a server, or a network communications device such as a router) to perform the method described in the embodiments or some parts of the embodiments .

The embodiments in this specification are all described in a progressive manner, for same or similar parts in the embodiments, refer to these embodiments, and each embodiment focuses on a difference from other embodiments. Especially, an apparatus embodiment is basically similar to a method embodiment, and therefore is described briefly; for related parts, refer to partial descriptions in the method embodiment. The described device and system embodiments are merely examples. The modules described as separate parts may or may not be physically separate, and parts displayed as modules may or may not be physical modules, may be located in one position, or may be distributed on a plurality of network units. Some or all the modules may be selected according to actual needs to achieve the objectives of the solutions of the embodiments. A person of ordinary skill in the art may understand and implement the embodiments of the present invention without creative efforts.

The foregoing descriptions are merely example embodiments, but are not intended to limit the protection scope .

## Claims

1. A data transmission method, comprising:
obtaining (S 101), by a first network device, a to-be-sent first data packet;
identifying (S 102), by the first network device, whether the first data packet belongs to a delay-sensitive service flow;
if the first data packet belongs to the delay-sensitive service flow, encapsulating (S103), by the first network device, the first data packet into a first quick user datagram protocol internet connections, QUIC, packet according to the QUIC protocol; and
sending (S104), by the first network device, the first QUIC packet to a second network device, receiving, by the first network device, a second QUIC packet sent by the second network device; and
parsing, by the first network device, the second QUIC packet according to the QUIC protocol to obtain a second data packet; and
identifying, by the first network device, a connection identifier from the second QUIC packet; and
scheduling, by the first network device, retransmission of a lost packet in the second data packet based on a service flow priority corresponding to the connection identifier;
wherein, the first network device and the second network device are any two devices of a gateway device, an access point device, and a terminal device in a same network.

2. The method according to claim 1, further comprising:
scheduling, by the first network device, a sequence of the second data packet in a wireless fidelity Wi-Fi queue based on a priority of entering a wireless fidelity multi-media, WMM, queue corresponding to the connection identifier.

3. The method according to any one of claim 1 to 2, further comprising:
receiving, by the first network device, report information for the delay-sensitive service flow; and
identifying, by the first network device, a packet of the delay-sensitive service flow based on the report information.

4. The method according to any one of claim 1 to 2, further comprising:
obtaining, by the first network device, configuration information for the delay-sensitive service flow; and
identifying, by the first network device, a packet of the delay-sensitive service flow based on the configuration information.

5. The method according to any one of claim 1 to 2, further comprising:
identifying, by the first network device, a packet of the delay-sensitive service flow based on a historical service flow and a machine learning model, wherein
a packet of the historical service flow is first encapsulated on the first network device according to the QUIC protocol and then sent to the second network device.

6. A data transmission apparatus (900), wherein the apparatus is a first network device and the apparatus comprises:
a packet obtaining unit (110), configured to obtain a to-be-sent first data packet;
a packet identification unit (120), configured to identify whether the first data packet belongs to a delay-sensitive service flow;
a packet encapsulation unit (130), configured to encapsulate, if the first data packet belongs to the delay-sensitive service flow, the first data packet into a first quick user datagram protocol internet connections, QUIC, packet according to the QUIC protocol; and
a packet sending unit (140), configured to send the first QUIC packet to a second network device,
a packet receiving unit, configured to receive a second QUIC packet sent by the second network device; and
a packet parsing unit, configured to parse the second QUIC packet according to the QUIC protocol to obtain a second data packet; and
a connection identifier identification unit, configured to identify a connection identifier from the second QUIC packet; and
a retransmission scheduling unit, configured to schedule, by the first network device, retransmission of a lost packet in the second data packet based on a service flow priority corresponding to the connection identifier;
wherein, the first network device and the second network device are any two devices of a gateway device, an access point device, and a terminal device in a same network.

7. The apparatus (900) according to claim 6, further comprising:
a sequence scheduling unit, configured to schedule a sequence of the second data packet in a wireless fidelity Wi-Fi queue based on a priority of entering a wireless fidelity multi-media WMM queue corresponding to the connection identifier.

8. The apparatus (900) according to any one of claim 6 to 7, further comprising:
a report information receiving unit, configured to receive report information for the delay-sensitive service flow; and
a first packet identification unit, configured to identify a packet of the delay-sensitive service flow based on the report information.

9. The apparatus (900) according to any one of claim 6 to 7, further comprising:
a configuration information obtaining unit, configured to obtain configuration information for the delay-sensitive service flow; and
a second packet identification unit, configured to identify a packet of the delay-sensitive service flow based on the configuration information.

10. The apparatus (900) according to any one of claim 6 to 7, further comprising:
a third packet identification unit, configured to identify, by the first network device, a packet of the delay-sensitive service flow based on a historical service flow and a machine learning model, wherein
a packet of the historical service flow is first encapsulated on the first network device according to the QUIC protocol and then sent to the second network device.

11. A data transmission apparatus according to claim 6, wherein the apparatus further comprises a processor (803) and a memory (804);
the memory (804) is configured to store instructions; and
the processor (803) is configured to execute the instructions stored in the memory.

## Patentansprüche

1. Datenübertragungsverfahren, umfassend:
Erhalten (S101), durch eine erste Netzwerkvorrichtung, eines zu sendenden ersten Datenpakets;
Identifizieren (S102), durch die erste Netzwerkvorrichtung, ob das erste Datenpaket zu einem verzögerungsempfindlichen Dienstablauf gehört;
wenn das erste Datenpaket zu dem verzögerungsempfindlichen Dienstablauf gehört, Einkapseln (S103), durch die erste Netzwerkvorrichtung, des ersten Datenpakets in ein erstes Quick-User-Datagram-Protocol-Internet-Connections-Paket, QUIC-Paket, gemäß dem QUIC-Protokoll; und
Senden (S104), durch die erste Netzwerkvorrichtung, des ersten QUIC-Pakets an eine zweite Netzwerkvorrichtung, Empfangen, durch die erste Netzwerkvorrichtung, eines zweiten QUIC-Pakets, das durch die zweite Netzwerkvorrichtung gesendet wird; und
Analysieren, durch die erste Netzwerkvorrichtung, des zweiten QUIC-Pakets gemäß dem QUIC-Protokoll, um ein zweites Datenpaket zu erhalten; und
Identifizieren, durch die erste Netzwerkvorrichtung, einer Verbindungskennung aus dem zweiten QUIC-Paket; und
Planen, durch die erste Netzwerkvorrichtung, einer erneuten Übertragung eines verlorenen Pakets in dem zweiten Datenpaket basierend auf einer Dienstablaufpriorität, die der Verbindungskennung entspricht;
wobei die erste Netzwerkvorrichtung und die zweite Netzwerkvorrichtung zwei beliebige Vorrichtungen einer Gateway-Vorrichtung, einer Zugriffspunktvorrichtung und einer Endgerätvorrichtung in einem gleichen Netzwerk sind.

2. Verfahren nach Anspruch 1, ferner umfassend:
Planen, durch die erste Netzwerkvorrichtung, einer Sequenz des zweiten Datenpakets in einer Wireless-Fidelity-Warteschlange, Wi-Fi-Warteschlange, basierend auf einer Priorität des Eintritts in eine Wireless-Fidelity-Multimedia-Warteschlange, WMM-Warteschlange, die der Verbindungskennung entspricht.

3. Verfahren nach einem der Ansprüche 1 bis 2, ferner umfassend:
Empfangen, durch die erste Netzwerkvorrichtung, von Berichtsinformationen für den verzögerungsempfindlichen Dienstablauf; und
Identifizieren, durch die erste Netzwerkvorrichtung, eines Pakets des verzögerungsempfindlichen Dienstablaufs basierend auf den Berichtsinformationen.

4. Verfahren nach einem der Ansprüche 1 bis 2, ferner umfassend:
Erhalten, durch die erste Netzwerkvorrichtung, von Konfigurationsinformationen für den verzögerungsempfindlichen Dienstablauf; und
Identifizieren, durch die erste Netzwerkvorrichtung, eines Pakets des verzögerungsempfindlichen Dienstablaufs basierend auf den Konfigurationsinformationen.

5. Verfahren nach einem der Ansprüche 1 bis 2, ferner umfassend:
Identifizieren, durch die erste Netzwerkvorrichtung, eines Pakets des verzögerungsempfindlichen Dienstablaufs basierend auf einem historischen Dienstablauf und einem Modell maschinellen Lernens, wobei
ein Paket des historischen Dienstablaufs zuerst an der ersten Netzwerkvorrichtung gemäß dem QUIC-Protokoll eingekapselt und dann an die zweite Netzwerkvorrichtung gesendet wird.

6. Datenübertragungseinrichtung (900), wobei die Einrichtung eine erste Netzwerkvorrichtung ist und die Einrichtung Folgendes umfasst:
eine Paketerhaltungseinheit (110), die zum Erhalten eines zu sendenden ersten Datenpakets konfiguriert ist;
eine Paketidentifizierungseinheit (120), die zum Identifizieren, ob das erste Datenpaket zu einem verzögerungsempfindlichen Dienstablauf gehört, konfiguriert ist;
eine Paketeinkapselungseinheit (130), die, falls das erste Datenpaket zu dem verzögerungsempfindlichen Dienstablauf gehört, zum Einkapseln des ersten Datenpakets in ein erstes Quick-User-Datagram-Protocol-Internet-Connections-Paket, QUIC-Paket, gemäß dem QUIC-Protokoll konfiguriert ist; und
eine Paketsendeeinheit (140), die zum Senden des ersten QUIC-Pakets an eine zweite Netzwerkvorrichtung konfiguriert ist,
eine Paketempfangseinheit, die zum Empfangen eines zweiten QUIC-Pakets konfiguriert ist, das durch die zweite Netzwerkvorrichtung gesendet wird; und
eine Paketanalysiereinheit, die zum Analysieren des zweiten QUIC-Pakets gemäß dem QUIC-Protokoll konfiguriert ist, um ein zweites Datenpaket zu erhalten; und
eine Verbindungskennungsidentifizierungseinheit, die zum Identifizieren einer Verbindungskennung aus dem zweiten QUIC-Paket konfiguriert ist; und
eine Neuübertragungsplanungseinheit, die zum Planen, durch die erste Netzwerkvorrichtung, einer erneuten Übertragung eines verlorenen Pakets in dem zweiten Datenpaket basierend auf einer Dienstablaufpriorität, die der Verbindungskennung entspricht, konfiguriert ist;
wobei die erste Netzwerkvorrichtung und die zweite Netzwerkvorrichtung zwei beliebige Vorrichtungen einer Gateway-Vorrichtung, einer Zugriffspunktvorrichtung und einer Endgerätvorrichtung in einem gleichen Netzwerk sind.

7. Einrichtung (900) nach Anspruch 6, ferner umfassend:
eine Sequenzplanungseinheit, die zum Planen einer Sequenz des zweiten Datenpakets in einer Wireless-Fidelity-Warteschlange, Wi-Fi-Warteschlange, basierend auf einer Priorität des Eintritts in eine Wireless-Fidelity-Multimedia-Warteschlange, WMM-Warteschlange, die der Verbindungskennung entspricht, konfiguriert ist.

8. Einrichtung (900) nach einem der Ansprüche 6 bis 7, ferner umfassend:
eine Berichtsinformationsempfangseinheit, die zum Empfangen von Berichtsinformationen für den verzögerungsempfindlichen Dienstablauf konfiguriert ist; und
eine erste Paketidentifizierungseinheit, die zum Identifizieren eines Pakets des verzögerungsempfindlichen Dienstablaufs basierend auf den Berichtsinformationen konfiguriert ist.

9. Einrichtung (900) nach einem der Ansprüche 6 bis 7, ferner umfassend:
eine Konfigurationsinformationserhaltungseinheit, die zum Erhalten von Konfigurationsinformationen für den verzögerungsempfindlichen Dienstablauf konfiguriert ist; und
eine zweite Paketidentifizierungseinheit, die zum Identifizieren eines Paket des verzögerungsempfindlichen Dienstablaufs basierend auf den Konfigurationsinformationen konfiguriert ist.

10. Einrichtung (900) nach einem der Ansprüche 6 bis 7, ferner umfassend:
eine dritte Paketidentifizierungseinheit, die zum Identifizieren, durch die erste Netzwerkvorrichtung, eines Pakets des verzögerungsempfindlichen Dienstablaufs basierend auf einem historischen Dienstablauf und einem Modell maschinellen Lernens konfiguriert ist, wobei
ein Paket des historischen Dienstablaufs zuerst an der ersten Netzwerkvorrichtung gemäß dem QUIC-Protokoll eingekapselt und dann an die zweite Netzwerkvorrichtung gesendet wird.

11. Datenübertragungseinrichtung nach Anspruch 6, wobei die Einrichtung ferner einen Prozessor (803) und einen Speicher (804) umfasst;
der Speicher (804) zum Speichern von Anweisungen konfiguriert ist; und
der Prozessor (803) zum Ausführen der in dem Speicher gespeicherten Anweisungen konfiguriert ist.

## Revendications

1. Procédé de transmission de données, comprenant :
l'obtention (S101), par un premier dispositif de réseau, d'un premier paquet de données à envoyer ;
le fait d'identifier (S102), par le premier dispositif de réseau, si le premier paquet de données appartient à un flux de service sensible au retard ;
si le premier paquet de données appartient au flux de service sensible au retard, l'encapsulation (S103), par le premier dispositif de réseau, du premier paquet de données dans un premier paquet de connexions Internet de protocole de datagramme utilisateur rapide, QUIC, selon le protocole QUIC ; et
l'envoi (S104), par le premier dispositif de réseau, du premier paquet QUIC à un second dispositif de réseau,
la réception, par le premier dispositif de réseau, d'un second paquet QUIC envoyé par le second dispositif de réseau ; et
l'analyse, par le premier dispositif de réseau, du second paquet QUIC selon le protocole QUIC pour obtenir un second paquet de données ; et
l'identification, par le premier dispositif de réseau, d'un identifiant de connexion à partir du second paquet QUIC ; et
la planification, par le premier dispositif de réseau, de la retransmission d'un paquet perdu dans le second paquet de données sur la base d'une priorité de flux de service correspondant à l'identifiant de connexion ;
dans lequel, le premier dispositif de réseau et le second dispositif de réseau sont deux dispositifs quelconques d'un dispositif de passerelle, d'un dispositif de point d'accès et d'un dispositif terminal dans un même réseau.

2. Procédé selon la revendication 1, comprenant en outre :
la planification, par le premier dispositif de réseau, d'une séquence du second paquet de données dans une file d'attente Wi-Fi de fidélité sans fil sur la base d'une priorité d'entrée dans une file d'attente multimédia de fidélité sans fil, WMM, correspondant à l'identifiant de connexion.

3. Procédé selon l'une quelconque des revendications 1 à 2, comprenant en outre :
la réception, par le premier dispositif de réseau, d'informations de rapport pour le flux de service sensible au retard ; et
l'identification, par le premier dispositif de réseau, d'un paquet du flux de service sensible au retard sur la base des informations de rapport.

4. Procédé selon l'une quelconque des revendications 1 à 2, comprenant en outre :
l'obtention, par le premier dispositif de réseau, d'informations de configuration pour le flux de service sensible au retard ; et
l'identification, par le premier dispositif de réseau, d'un paquet du flux de service sensible au retard sur la base des informations de configuration.

5. Procédé selon l'une quelconque des revendications 1 à 2, comprenant en outre :
l'identification, par le premier dispositif de réseau, d'un paquet du flux de service sensible au retard sur la base d'un flux de service historique et d'un modèle d'apprentissage automatique, dans lequel
un paquet du flux de service historique est d'abord encapsulé sur le premier dispositif de réseau selon le protocole QUIC puis envoyé au second dispositif de réseau.

6. Appareil de transmission de données (900), dans lequel l'appareil est un premier dispositif de réseau, et l'appareil comprend :
une unité d'obtention de paquet (110), configurée pour obtenir un premier paquet de données à envoyer ;
une unité d'identification de paquet (120), configurée pour identifier si le premier paquet de données appartient à un flux de service sensible au retard ;
une unité d'encapsulation de paquet (130), configurée pour encapsuler, si le premier paquet de données appartient au flux de service sensible au retard, le premier paquet de données dans un premier paquet de connexions Internet de protocole de datagramme utilisateur rapide, QUIC, selon le protocole QUIC ; et
une unité d'envoi de paquet (140), configurée pour envoyer le premier paquet QUIC à un second dispositif de réseau,
une unité de réception de paquet, configurée pour recevoir un second paquet QUIC envoyé par le second dispositif de réseau ; et
une unité d'analyse de paquet, configurée pour analyser le second paquet QUIC selon le protocole QUIC pour obtenir un second paquet de données ; et
une unité d'identification d'identifiant de connexion, configurée pour identifier un identifiant de connexion à partir du second paquet QUIC ; et
une unité de planification de retransmission, configurée pour planifier, par le premier dispositif de réseau, la retransmission d'un paquet perdu dans le second paquet de données sur la base d'une priorité de flux de service correspondant à l'identifiant de connexion ;
dans lequel, le premier dispositif de réseau et le second dispositif de réseau sont deux dispositifs quelconques d'un dispositif de passerelle, d'un dispositif de point d'accès et d'un dispositif terminal dans un même réseau.

7. Appareil (900) selon la revendication 6, comprenant en outre :
une unité de planification de séquence, configurée pour planifier une séquence du second paquet de données dans une file d'attente Wi-Fi de fidélité sans fil sur la base d'une priorité d'entrée dans une file d'attente multimédia de fidélité sans fil WMM correspondant à l'identifiant de connexion.

8. Appareil (900) selon l'une quelconque des revendications 6 à 7, comprenant en outre :
une unité de réception d'informations de rapport, configurée pour recevoir des informations de rapport pour le flux de service sensible au retard ; et
une première unité d'identification de paquet, configurée pour identifier un paquet du flux de service sensible au retard sur la base des informations de rapport.

9. Appareil (900) selon l'une quelconque des revendications 6 à 7, comprenant en outre :
une unité d'obtention d'informations de configuration, configurée pour obtenir des informations de configuration pour le flux de service sensible au retard ; et
une deuxième unité d'identification de paquet, configurée pour identifier un paquet du flux de service sensible au retard sur la base des informations de configuration.

10. Appareil (900) selon l'une quelconque des revendications 6 à 7, comprenant en outre :
une troisième unité d'identification de paquet, configurée pour identifier, par le premier dispositif de réseau, un paquet du flux de service sensible au retard sur la base d'un flux de service historique et d'un modèle d'apprentissage automatique, dans lequel
un paquet du flux de service historique est d'abord encapsulé sur le premier dispositif de réseau selon le protocole QUIC puis envoyé au second dispositif de réseau.

11. Appareil de transmission de données selon la revendication 6, dans lequel l'appareil comprend en outre un processeur (803) et une mémoire (804) ;
la mémoire (804) est configurée pour stocker des instructions ; et
le processeur (803) est configuré pour exécuter les instructions stockées dans la mémoire.
